# EUROPÄISCHE PATENTSCHRIFT

(11) **EP 4 298 421 B1**
(45) Veröffentlichungstag und Bekanntmachung des Hinweises auf die Patenterteilung: **21.08.2024**
(21) Anmeldenummer: 22707417.6
(22) Anmeldetag: 21.02.2022
(51) Int. Cl.: G01M 13/025, G01M 13/021

(54) **ÜBERLASTSCHUTZ FÜR ANTRIEBSPRÜFSTÄNDE**
OVERLOAD PROTECTION FOR DRIVE TEST BENCHES
PROTECTION CONTRE LES SURCHARGES POUR BANCS D'ESSAI

(30) Priorität: 26.02.2021 EP 21159586
(43) Veröffentlichungstag der Anmeldung: 03.01.2024
(73) Patentinhaber: Flender GmbH, 46395 Bocholt (DE)
(72) Erfinder: HAMBRECHT, Ralf, 46399 Bocholt (DE)
(74) Vertreter: Michalski Hüttermann & Partner Patentanwälte mbB
(86) Internationale Anmeldenummer: PCT/EP2022/054174
(87) Internationale Veröffentlichungsnummer: WO 2022/179959

(56) Entgegenhaltungen:
- CN-A- 110 823 566
- DE-A1- 102007 032 412
- US-A1- 2002 189 320

## Beschreibung

Die Erfindung betrifft eine Rotorlagereinheit für die Prüfung einer Antriebskomponente. Ferner betrifft die Erfindung einen Prüfaufbau mit einer derartigen Rotorlagereinheit, wobei der Prüfaufbau ferner die zu prüfende Antriebskomponente aufweist. Zudem betrifft die Erfindung eine Verwendung einer derartigen Rotorlagereinheit und/oder eines derartigen Prüfaufbaus.

Heutzutage werden Antriebskomponenten wie beispielsweise ein Getriebe, eine Getriebe-Generator Kombinationen oder auch ein Generator als Modul oder Module in integrierten Systemen getestet. Dies gilt insbesondere für Antriebskomponenten von Windkraftanlagen, die aufgrund ihrer Leistungsfähigkeit und ihres Aufbaus in Modulen getestet werden. Bei derartigen Systemen ist das Getriebe häufig zwischen einem Generator und einer Rotorlagerung des Antriebsstrangs angeordnet. Die Antriebskomponenten sind dabei kraft- und/oder formschlüssig mit den angrenzenden Wellen verbunden. Das Getriebe ist dabei oftmals als Planetengetriebe ausgebildet. Im Rahmen der Entwicklungsprüfungen oder der Serienabnahmeprüfungen wird das System unter Drehzahl und oftmals auch unter Drehmoment in einem Verspannkreis getestet.

Kommt es zu einem Störfall, so kann ein abruptes Abbremsen der Welle erforderlich werden. Die dafür notwenigen Kräfte werden von der Rotorlagereinheit aufgenommen und in das Fundament der Rotorlagereinheit bzw. des Prüfaufbaus eingeleitet. Die dabei auftretenden Kräfte und Momente müssen von der Tragstruktur in der Schnittstelle zum Fundament ertragen werden können und vom Fundament auch schadfrei aufgenommen werden können. Die entsprechenden Komponenten müssen daher auf diese mechanische Belastung ausgelegt werden, andernfalls können aufgrund der Belastung Komponenten brechen und die gespeicherte kinetische Energie des Systems würde unkontrolliert frei werden, beispielsweise durch umherfliegende Bruchstücke. Aus sicherheitstechnischen Betrachtungen ist dieser Zustand äußerst bedenklich.

Um das Risiko zu beherrschen werden heutzutage Sicherheitskupplungen bzw. Rutschkupplungen eingesetzt, um beispielsweise die Module Getriebe und Generator voneinander abzusichern und im Störfall voneinander zu trennen. Aus DE 102007 032 412 A1 ist es bekannt bei einer derartigen Windkraftanlage das Ausmaß eines Durchrutschens der Rutschkupplung mit Hilfe eines axial verschieblichen Meßkörpers einer Messeinrichtung anzuzeigen, um den Bedarf für eine Wartung erkennen zu können. US 2002/189320 A1 betrifft technologischen Hintergrund.

Aus CN 110823 566 A ist es bekannt eine Reibungskupplung für ein Kraftfahrzeug einem Ermüdungstest zu unterziehen, indem die in einem feststehenden Gehäuse eingeschlossene Reibungskupplung von einem Antrieb über ein Übersetzungsgetriebe mit einer hohen Drehzahl angetrieben wird, wobei das Übersetzungsgetriebe an einer Axialseite der Reibungskupplung angreift und an der anderen Axialseite der Reibungskupplung eine mitdrehende Welle axial angepresst wird.

Im Folgenden wird zwischen einem Testen und Prüfen von Komponenten nicht unterschieden.

Der Erfindung liegt die Aufgabe zugrunde, die Anordnung für die Prüfung einer Antriebskomponente zu verbessern.

Die Lösung der Aufgabe erfolgt durch eine Rotorlagereinheit mit den Merkmalen des Anspruchs 1, einen Prüfaufbau mit den Merkmalen des Anspruchs 8 sowie eine Verwendung mit den Merkmalen des Anspruchs 14. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Die Rotorlagereinheit für die Prüfung einer Antriebskomponente weist einen Wellenteil, einen Führungskasten und ein Gehäuseteil auf, wobei der Wellenteil gegenüber dem Gehäuseteil drehbar angeordnet ist, wobei das Gehäuseteil reibschlüssig mit dem Führungskasten verbunden ist, wobei das Gehäuseteil der Rotorlagereinheit zur kraftschlüssigen und/oder formschlüssigen Verbindung mit einem Gehäuse der zu prüfenden Antriebskomponente eingerichtet ist, wobei der Wellenteil der Rotorlagereinheit zur kraftschlüssigen und/oder formschlüssigen Verbindung mit einer Welle der zu prüfenden Antriebskomponente eingerichtet ist. Der Prüfaufbau weist eine derartige Rotorlagereinheit auf, wobei der Prüfaufbau ferner die zu prüfende Antriebskomponente, insbesondere das Getriebe oder das Planetengetriebe, aufweist, wobei das Gehäuseteil der Rotorlagereinheit kraftschlüssig und/oder formschlüssig mit dem Gehäuse der zu prüfenden Antriebskomponente verbunden ist, wobei der Wellenteil der Rotorlagereinheit kraftschlüssig und/oder formschlüssig mit der Welle der zu prüfenden Antriebskomponente verbunden ist.

Der Erfindung liegt unter anderem die Erkenntnis zugrunde, dass es mit der vorgeschlagenen Anordnung möglich ist, die mechanische Belastung der Antriebskomponenten und des Fundaments zu reduzieren. Die Erfindung ermöglicht es, Prüfaufbauten von Systemen im Störfall zu schützen auch bei geringer Belastbarkeit der Komponenten, beispielsweise des Fundaments, ohne dass die tragenden Strukturen mit zu hohen Lasten beaufschlagt werden und unkontrollierte Bewegungen oder Zerstörungen hervorrufen könnten.

Dazu weist die Rotorlagereinheit im Wesentlichen den Wellenteil, den Führungskasten und das Gehäuseteil auf. Der Wellenteil wird mit der Welle der zu prüfenden Antriebskomponente verbunden und kann diese lagern. Dabei handelt es sich beispielsweise um die Eingangswelle eines Getriebes, insbesondere eines Planetengetriebes. Bei der Eingangswelle kann es sich beispielsweise um den Planetenträger eines Planetengetriebes handeln. Bei dem Planetengetriebe als Antriebskomponente kann darüber hinaus auch die Zentrierung der Welle durch die Rotorlagereinheit erfolgen. Der Wellenteil ist beispielsweise über Lager drehbar mit dem Gehäuseteil verbunden. Der Wellenteil kann daher während der Tests rotieren. Das Gehäuseteil und der Führungskasten sind reibschlüssig miteinander verbunden. Dabei sind diese Komponenten horizontal und vertikal gegeneinander fixiert. Wirkt nun ein Drehmoment zwischen Gehäuseteil und Führungskasten, so wirkt an der Grenze zwischen Gehäuseteil und Führungskasten eine Kraft. Übersteigt diese die Kraft, die durch den Reibschluss entsteht, so kann das Gehäuseteil gegenüber dem Führungskasten eine Rotationsbewegung um dessen eigene Achse vollziehen. Dies wird für den Fehlerfall ausgenutzt, wenn es beispielsweise zu einem Blockieren des Getriebes oder der Lagerung des Rotors im Generator kommt. Durch diese Blockade in der Antriebskomponente wie beispielsweise in der Verzahnung des Getriebes oder der Rotorlagerung des Generator-Rotors wirkt eine kinetische Energie der rotierenden Schwungmassen als Stoßimpuls auf die Tragstruktur in der Verbindung zum Fundament.

Es wurde erkannt, dass sich die Antriebskomponente, insbesondere ein Planetengetriebe, durch relativ zueinander drehbare Komponenten auszeichnet. Die zu prüfende Antriebskomponente weist nämlich eine relativ zu einem feststehenden Gehäuse drehbare Welle auf. Für das Prüfen und/oder Testen der Antriebskomponente ist es daher erforderlich die Welle der zu prüfenden Antriebskomponente drehfest mit dem Wellenteil der Rotorlagereinheit zu koppeln, während das Gehäuse eigentlich unbeweglich festgehalten soll, beispielsweise durch eine unbewegliche Fixierung mit einem feststehenden Bauteil des Prüfstands und/oder einem Fundament. Da jedoch die zu prüfende Antriebskomponente bewusst extremen Betriebssituationen ausgesetzt werden soll, ist es nicht unwahrscheinlich, dass ein Bauteilversagen in der zu prüfenden Antriebskomponente auftreten kann, wobei dieses Bauteilversagen zu einem drehfesten Blockieren der Welle der Antriebskomponente mit dem Gehäuse der Antriebskomponente führen kann. Dadurch, dass das eigentlich feststehend fixierte Gehäuse nicht mit einem starren, feststehenden Körper fixiert wird, sondern mit dem Gehäuseteil der Rotorlagereinheit verbunden wird, kann bei einer Blockade der Welle der Antriebskomponente mit dem Gehäuse der Antriebskomponente in dem Fall eines Bauteilversagens, das mit dem Gehäuse verbundene Gehäuseteil der Rotorlagereinheit an dem Führungskasten durchrutschen. Dieser Schlupfbetrieb verhindert ein hartes Anschlagen und kann das maximal auftretende plötzlich abzustützende Drehmoment deutlich reduzieren, so dass im Störfall die tragenden Strukturen mit geringeren Lasten beaufschlagt werden und unkontrollierte Bewegungen oder Zerstörungen vermieden werden können.

Zwischen dem Gehäuseteil der Rotorlagereinheit und dem Führungskasten der Rotorlagereinheit kann ein Drehmomentbegrenzer ausgebildet sein, der ab einem definierten Grenzdrehmoment durchrutsch und ein reibschlüssiges Bremsen bewirken kann. Der ausgebildete Drehmomentbegrenzer ist hierbei Teil der Rotorlagereinheit für den Prüfaufbau und nicht Teil der zu prüfenden Antriebskomponente, so dass in dem zu prüfenden Modul eine Drehmomentbegrenzung zu Testzwecken nicht vorgehalten werden muss und die Herstellungskosten gering gehalten sind. Der Reibschluss zwischen dem Gehäuseteil und dem Führungskasten kann einen Tiefpassfilter ausbilden, der das maximal abzustützende Drehmoment auf das eingestellte Grenzdrehmoment begrenzt. Das Grenzdrehmoment hängt von Reibungseigenschaften, insbesondere Reibwert und Anpresskraft, zwischen dem Gehäuseteil und dem Führungskasten ab, die zur Einstellung des gewünschten maximalen Drehmoments geeignet gewählt sind. Vorzugsweise liegen das Gehäuseteil und der Führungskasten direkt kontaktieren aneinander an. Beispielsweise ist zwischen dem Gehäuseteil und dem Führungskasten eine Presspassung vorgesehen. Das Gehäuseteil und der Führungskasten sind insbesondere reibbelagfrei, das heißt ohne zwischen dem Gehäuseteil und dem Führungskasten vorgesehenen Reibbeläge, miteinander reibschlüssig gekoppelt. Dadurch ist sichergestellt, dass bei einem Durchrutschen des Gehäuseteils an dem Führungskasten, insbesondere aufgrund eines Stahl/Stahl-Kontakts, ohne zusätzliche Hilfsmittel ein deutlich hörbares Geräusch auftritt, das unmittelbar intuitiv das Vorliegen eines Störfalls kostengünstig signalisiert.

Durch die Verbindung des Gehäuseteils mit dem Gehäuse der zu prüfenden Antriebskomponente, beispielsweise mittels eines Flansches, entsteht ein entsprechendes Drehmoment zwischen dem Gehäuseteil und dem Führungskasten, das bewirkt, dass das Gehäuseteil gegenüber dem Führungskasten rotiert. Damit können die enormen dynamischen Kräfte für die abrupte Abbremsung der rotierenden Schwungmassen im Antriebsstrang des Testaufbaus vermieden werden, die durch die Abstützstruktur in Verbindung zum Fundament und dem Fundament selbst ertragen werden müssten und dort im Falle einer Überlastung zu einem Schaden führen können.

Mit steigender Größe, Leistungsfähigkeit und Masse der eingesetzten Komponenten im Prüfaufbau werden die Rotationsenergien im System so hoch, dass in Verbindung mit einem Störfall ein abruptes Abbremsen durch die umgebenden Strukturen festigkeitstechnisch nicht für jede Höhe der Masse, insbesondere für die rotierende Masse, sichergestellt werden kann. Die Komponenten, die durch einen derartigen Störfall zu hoch belastet würden, unterliegen dem Risiko eines Bruchs und die gespeicherte kinetische Energie des Systems würde in einer unkontrollierten Bewegung großer Massen resultieren. Derartige Prüfungen finden in Fertigungs- und Montagehallen statt. Dies würde sowohl ein Sicherheitsrisiko für die in der Umgebung arbeitenden Personen darstellen als auch hohe Sachschäden im Störfall nach sich ziehen können. Durch den vorgeschlagenen Aufbau kann die Sicherheit vor einem Bruch und unkontrollierten Bewegungen von Bruchstücken zuverlässig vermieden werden. Dadurch ist auch die Aufstellung derartiger Prüfaufbauten in Fertigungs- und Montagehallen ohne weitere festigkeitserhöhende Maßnahmen und damit einhergehenden Überdimensionierung zur Beseitigung oder Reduzierung des zuvor beschriebenen Gefährdungspotentials möglich.

Handelt es sich beispielsweise um einen Wuchttest des Generators im System bei Nenndrehzahl, könnte ein Störfall im Getriebe beispielsweise durch Verkeilen von Bruchstücken in den Verzahnungen zu einem plötzlichen Auftreten hoher Lasten führen, die nötig werden, um das System in seiner Position zu halten.

Durch die vorgeschlagene Rotorlagereinheit wird die in den Systemen gespeicherte kinetische Energie bei einem Störfall, wie beispielsweise einer internen Blockierung im Getriebe, in Wärme und Rotationsenergie eines erweiterten Systems um eine definierte Achse umgewandelt.

Dabei kann das zu prüfende Antriebssystem aus einem Planetengetriebe mit optional angekoppeltem Generator zur Funktions- und Lastprüfung einem abschließenden Last- und Drehzahltest unterzogen werden. Gleiches kann ebenfalls für einen Getriebe, eine Getriebe-Generatorkombination oder auch nur einen Generator durchgeführt werden.

Mit der vorgeschlagenen Anordnung erzeugt man einen geschlossenen Torsionsverspannkreis bei dem das Gehäuseteil so gestaltet ist, dass es in einem Führungskasten zwar in seiner horizontalen und vertikalen Position fixiert ist, aber bei einem Störfall eine Drehbewegung des erweiterten Systems ermöglicht. Im normalen ungestörten Test- oder Prüflauf dreht nur der Wellenteil und das Gehäuseteil steht still. Kommt es beispielsweise im Getriebe zu einer Abwälzstörung oder Blockierung, würde das Gehäuseteil als Momentanpol fungieren und Kräfte aus der gespeicherten kinetischen Energie über die Stützstruktur in das Fundament einleiten wollen. Dies und eine damit einhergehende mögliche Überlastung der Stützstruktur wird durch die vorgeschlagene Anordnung dadurch verhindert, dass das Gehäuseteil derart reibschlüssig mit dem Führungskasten verbunden ist, dass eine freie Rotation bei Überlast ermöglicht. Insbesondere ist eine reine reibschlüssige Verbindung zwischen dem Gehäuseteil und dem Führungskasten vorteilhaft, weil damit unter allen Betriebsbedingungen die freie Rotation bei Überlast ermöglicht werden kann.

Die bisherigen Tragstrukturen sind derart ausgeführt bzw. dimensioniert, dass Kräfte und Momente resultierend aus möglichen Störfällen, z.B. Blockierung im Getriebe oder im Generatorrotor, abgefangen und in das Fundament weitergeleitet werden können. Mit dem vorgeschlagenen Prüfaufbau können auch in Bezug auf die Nennleistung größere Systeme mit entsprechend größeren Trägheitsmomenten und/oder Rotationsenergien auf dem Prüfstand mit der vorgeschlagenen Rotorlagereinheit getestet werden. Mit anderen Worten kann die Leistungsfähigkeit des Prüfstands mit Hilfe der vorgeschlagenen Anordnung deutlich vergrößert werden.

Durch den einstellbaren Abstand und der geeigneten Wahl der kontaktierenden Materialien zwischen Führungskasten und Gehäuseteil können die auftretenden Lasten so eingestellt werden, dass die im Kraftschluss befindlichen Bauteile nicht überlastet werden. Zu diesen Bauteilen zählen insbesondere Verschraubungen der Füße zum Fundament, die durch eine Überlastung gefährdet wären.

Im Vergleich zu einer Rutschkupplung als Überlastkupplung, wie sie beispielsweise bei aufgelösten high-speed Triebsträngen zum Einsatz kommt, ist der Aufbau des Prüfstands mit der vorgeschlagene Rotorlagereinheit bzw. der Prüfaufbau, insbesondere für integrierte Hybriden-Systeme aus einem Getriebe/Generatorsystem, unter Berücksichtigung der diskutierten Sicherheitsaspekte deutlich kostengünstiger.

Zur Erlangung einer CE-Kennzeichnung von Prüfaufbauten ist es notwendig, Störfälle sicher abzufangen. Dazu wird in einer Risiko-/Gefährdungsbeurteilung beschrieben, wie dieser Störfall abgesichert wird. Da das Gefährdungspotential durch Bruch und umherfliegenden Teilen durch den Aufbau der Rotorlagereinheit bzw. des Prüfaufbaus allein aus physikalischen Betrachtungen sicher vermieden wird, ist der Nachweis darüber entsprechend leicht zu führen.

Für den Aufbau des Prüfstands mit der oder den zu prüfenden Antriebskomponenten hat es sich als vorteilhaft erwiesen, stationäre Versorgungsleitungen zu den Prüflingen wie beispielsweise eine Schmierstoffversorgung sowie dessen Rückführung, eine Sensorik oder eine elektrische Leistungsversorgung so auszuführen, dass diese bei Detektion einer beginnenden Drehbewegung des Gehäuseteils gegenüber dem Führungskasten einfach und sicher zum stationären Teil aufgetrennt werden.

Bei einer weiteren vorteilhaften Ausgestaltung der Erfindung ist die zu prüfende Antriebskomponente ein Getriebe, insbesondere ein Planetengetriebe. Die Erfahrung hat gezeigt, dass die Gefahr einer Blockade für ein Getriebe im Vergleich zu einer Blockade des Rotors eines Generators gerade in einem Prüfaufbau höher ist. Somit hat sich die Verwendung der vorgeschlagenen Rotorlagereinheit gerade für Getriebe und insbesondere für Planetengetriebe als besonders vorteilhaft erwiesen. Durch den Prüfaufbau können bei Getrieben gerade auch Folgeschäden bei Auftreten eines Störfalls zuverlässig verhindert werden.

Insbesondere weist das Gehäuseteil einen Gehäuseflansch zur drehfesten Befestigung des Gehäuses der zu prüfenden Antriebskomponente mittels axial ausgerichteter Befestigungsmittel aufweist. Das Gehäuse der zu prüfenden Antriebskomponente kann über mehrere In Umfangsrichtung verteilte und insbesondere auf einem gemeinsamen Radius verteilte Befestigungsstellen an der über das Gehäuseteil an der Rotorlagereinheit angeflanscht werden. Eine direkte Befestigung mit einem Fundament ist vermieden. Der Befestigungsflansch kann beispielsweise in axialer Richtung über die axiale Erstreckung des Führungskastens überstehen und gegebenenfalls nach radial außen von dem übrigen Gehäuseteil abstehen, so dass der Gehäuseflansch insbesondere zumindest teilweise in einem gemeinsamen Radiusbereich mit dem Führungskasten aber zu dem Führungskasten axial beabstandet vorgesehen sein kann. Dadurch kann bei einem geringen Bauraumbedarf ein entsprechend hohes Drehmoment zwischen dem Gehäuse der zu prüfenden Antriebskomponente und dem Gehäuseteil der Rotorlagereinheit übertragen werden. Bei den axial ausgerichteten Befestigungsmitteln kann es sich um mit Muttern gesicherte Schrauben handeln. Alternativ kann der Gehäuseflansch an einer axialen Stirnseite des Gehäuseteils vollständig radial innerhalb des Führungskastens ausgebildet sein. Das Gehäuseteil kann zur Ausbildung des Gehäuseflanschs beispielsweise axial verlaufende Durchgangsöffnungen aufweisen.

Vorzugsweise weist das Gehäuseteil axial ausgerichtete Sacklöcher mit Innengewinde zur Verschraubung mit dem Gehäuse der zu prüfenden Antriebskomponente auf. Das Gehäuse der zu prüfenden Antriebskomponente kann dadurch leicht an einer Axialseite des Gehäuseteil angeschraubt werden.

Besonders bevorzugt ist das Gehäuseteil im Wesentlichen spiegelbildlich ausgestaltet. Dadurch kann auch an der anderen Axialseite der Gehäuseflansch und/oder axial ausgerichtete Sacklöcher mit Innengewinde vorgesehen sei. Dadurch ist es möglich an beiden Axialseite der Rotorlagereinheit jeweils eine Antriebskomponente zu prüfen und/oder zu testen.

Bei einer weiteren vorteilhaften Ausgestaltung der Erfindung weist der Führungskasten einen ersten Teil und einen zweiten Teil aufweist, wobei die Höhe eines Reibschlusses der reibschlüssigen Verbindung durch einen vorgebbaren Abstand zwischen dem ersten Teil und dem zweiten Teil des Führungskastens und/oder durch die tribologische Kontaktgestaltung zwischen dem Gehäuseteil und dem Führungskasten einstellbar ist. Die Höhe des Reibschlusses kann durch den Abstand und die tribologische Kontaktgestaltung erfolgen. Der Abstand kann beispielsweise durch eine Schraubverbindung einstellbar ausgeführt sein. Die Materialien bzw. die Oberflächenbeschichtung werden dabei derart gewählt, dass die Ädhäsions-/Fressneigung gering ist und gute Notlaufeigenschaften aufweist. Durch diese Einstellmöglichkeit ist der Prüfaufbau an die Leistungsfähigkeit bzw. physikalische Eigenschaften der Komponenten wie beispielsweise Nennleistung oder Trägheitsmoment anpassbar. Ebenso können die Gegebenheiten vor Ort, wie die Dimensionierung des Fundaments oder der Trag- oder Stützstruktur berücksichtigt werden, um sicherheitskritische Zustände wie beispielsweise den Bruch von Komponententeilen zu vermeiden.

Insbesondere weist der erste Teil und/oder der zweite Teil eine zum Gehäuseteil weisende abriebfeste Gleitfläche auf, wobei die abriebfeste Gleitfläche insbesondere durch eine PVD Hartstoffschicht und/oder eine DLC-Sicht ausgebildet ist. Der obere und/oder untere Teil des Führungskastens können durch ein einzelnes oder mehrere geometrisch definierten Gleitstücke mit bekannter Steifigkeit ausgeführt werden, welche die jeweilige Gleitfläche aufweisen. In Verbindung mit dem einstellbaren Abstand zwischen dem ersten Teil und dem zweiten Teil und dem aus der tribologischen Kontaktgestaltung bekannten Reibungskoeffizienten, kann somit ein definiertes Rückhaltemoment eingestellt werden. Die tribologische Kontaktgestaltung an dem ersten und/oder zweiten Teil kann so auszuführt sein, dass eine minimale Adhäsionsneigung, das heißt kein Fressen, zwischen den Werkstoffen im Kontakt zueinander und bei Gleitbewegung zueinander besteht und gleichzeitig eine hohe Abriebfestigkeit sowie Flächenpressungsbeständigkeit vorliegt. Dies kann mit Hilfe von verschleißbeständigen und hochfesten PVD ("physical vapour deposition") Hartstoffschichten, insbesondere DLC ("diamond like carbon") erzielt werden.

Bei einer weiteren vorteilhaften Ausgestaltung der Erfindung ist die zu prüfende Antriebskomponente oder das Getriebe für die Anwendung in einer Windkraftanlage vorgesehen. Die Anordnung des Prüfstands und des Prüfaufbaus eignen sich in besonderer Weise für das Prüfen und/oder das Testen von einer oder mehreren Antriebskomponenten wie beispielsweise dem Generator oder dem Getriebe, insbesondere dem Planetengetriebe, einer Windkraftanlage. Diese Antriebskomponenten werden in relativ großer Stückzahl produziert und die Anforderungen an die Zuverlässigkeit sind wegen der schwer zugänglichen Anordnung der Antriebskomponenten auf dem Turm bzw. in der Gondel einer Windkraftanlage besonders hoch. Darüber hinaus gibt es auch zahlreiche Anforderungen bezüglich einer Zertifizierung, die Tests unter definierten Randbedingungen erfordern. Diese Randbedingungen können auf dem Prüfstand bzw. an dem Prüfaufbau eingestellt werden, so dass sich dieser Prüfstand bzw. dieser Prüfaufbau im besonderen Maße für Messungen und Tests an einem Planetengetriebe für Windkraftanwendungen eignet und vorteilhaft ist.

Bei einer weiteren vorteilhaften Ausgestaltung der Erfindung ist die Nennleistung der zu prüfenden Antriebskomponente größer als 3 MW. Bei größeren Systemen ab einer Nennleistung von mehr als 3 MW sind die Rotationsenergien während des Prüf- oder Testvorgangs so hoch, dass ein besonders großer Aufwand betrieben werden müsste, diese Störfälle über die notwendige Tragstruktur abzufangen und ins Fundament einzuleiten. Durch die Anwendung des vorgeschlagenen Prüfstands bzw. des vorgeschlagenen Prüfaufbaus müssen die Komponenten des Prüfaufbaus wie die Rotorlagereinheit nicht mehr für diesen Störfall dimensioniert werden und können leichter und kostengünstiger realisiert werden.

Bei einer weiteren vorteilhaften Ausgestaltung der Erfindung ist der Prüfaufbau in einer back-to-back Anordnung angeordnet. Mit dieser Anordnung ist es möglich, gleichzeitig mindestens zwei Antriebskomponenten wie beispielsweise Getriebe, insbesondere zwei Planetengetriebe, zu prüfen. Der Prüfstand bzw. der Prüfaufbau ist bei dem back-to-back Aufbau symmetrisch bezüglich der zentral angeordneten Rotorlagereinheit ausgeführt. Auch die Rotorlagereinheit kann in diesem Fall symmetrisch ausgeführt sein. An beiden Seiten der Rotorlagereinheit wird jeweils die entsprechende Antriebskomponente oder die Antriebskomponenten angeordnet. Dabei ist es vorteilhaft, für die back-to-back Anordnung auch zwei elektrische Maschinen vorzusehen, zwischen denen die zu prüfenden Antriebskomponenten wie Getriebe bzw. Planetengetriebe und die Rotorlagereinheit, insbesondere symmetrisch, angeordnet sind. Durch die mindestens zwei zu prüfenden Antriebskomponenten dieser Anordnung, die über die jeweiligen Wellen miteinander verbunden sind, erhöht sich auch die Rotationsenergie, die durch die Rotorlagereinheit abgebaut werden muss. Mit dem vorgeschlagenen Aufbau der Rotorlagereinheit und des Prüfaufbaus können die betrachteten Sicherheitsaspekte auch bei diesen deutlich erhöhten Rotationsenergien sicher beherrscht werden.

Ein Beispiel für eine Back-to-back Anordnung ist eine Getriebeverspannprüfung im System, bei der zwei Systeme back-to-back verspannt sind und beispielsweise als Serienprüfung "end of line" zum Einsatz kommen.

Bei einer weiteren vorteilhaften Ausgestaltung der Erfindung ist die zu prüfende Antriebskomponente mit einer elektrischen Maschine gekoppelt. Die elektrische Maschine erlaubt es, ein Drehmoment auf die zu prüfende Antriebskomponente zu übertragen und damit beispielsweise das Getriebe im gewünschten Arbeitspunkt zu betreiben. Auf diese Weise können test- bzw. Prüfpunkte auf einfache Weise angefahren und abgearbeitet werden. Darüber hinaus ist auch die Welle der elektrischen Maschine über den Aufbau der Rotorlagereinheit gegenüber einem Blockieren und damit einhergehenden Zerstörung abgesichert. Besonders vorteilhaft ist die Anordnung von zwei elektrischen Maschinen, beispielsweise in einem back-to-back Aufbau. Dann können Drehmoment und Drehzahl unabhängig voneinander auf das Getriebe oder die Getriebe gegeben werden.

Die elektrische Maschine kann dabei auf dem Fundament des Prüfstands lagern. Mit anderen Worten steht die elektrische Maschine auf dem Fundament und leitet, zumindest im Stillstand, seine Gewichtskraft dort ein. Alternativ ist es auch möglich, die elektrische Maschine über das Gehäuse oder, je nach Aufbau, die Gehäuse weiterer Antriebskomponenten an der Rotorlagereinheit zu lagern und die Gewichtskraft im Stillstand über die Rotorlagereinheit in das Fundament einzuleiten.

Ein Aspekt der Erfindung betrifft eine Verwendung einer Rotorlagereinheit, die wie vorstehend beschrieben aus- und weitergebildet sein kann, und/oder eines Prüfaufbaus, der wie vorstehend beschrieben aus- und weitergebildet sein kann, zum Prüfen und/oder Testen eines Planetengetriebes für eine Windkraftanlage. Insbesondere wird ein Hohlrad des Planetengetriebes als Gehäuse und eine Sonnenwelle und/oder eine Planetenträgerwelle des Planetengetriebes als Welle verwendet. Das für eine Windkraftanlage ausgelegte Planetengetriebe stellt die vorstehend beschriebene mit der Rotorlagereinheit des Prüfaufbaus zu verbindende Antriebskomponente dar.

Im Folgenden wird die Erfindung anhand der in den Figuren dargestellten Ausführungsbeispiele näher beschrieben und erläutert. Es zeigen:
- FIG 1 und FIG 2: unterschiedliche Sichten auf eine Rotorlagereinheit und
- FIG 3: einen Prüfaufbau.

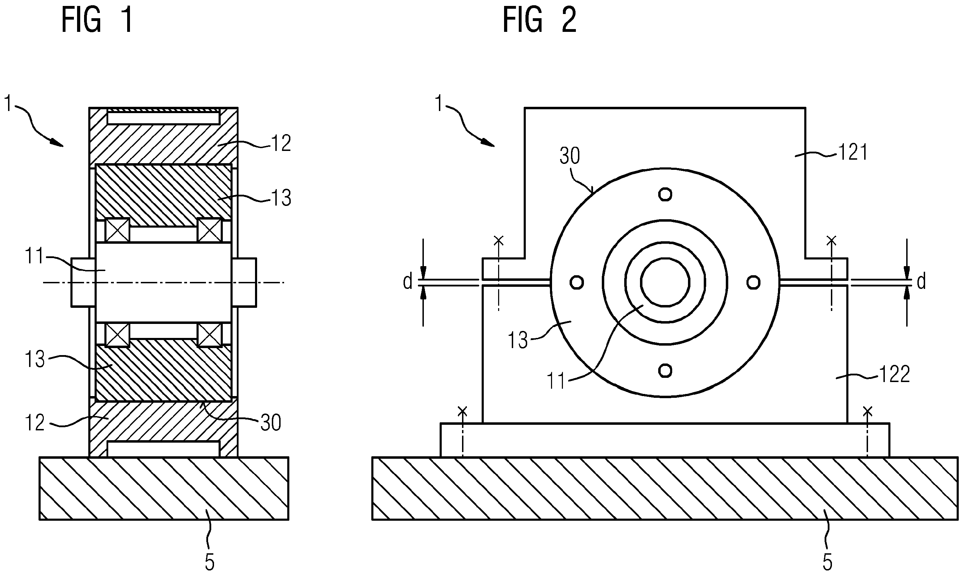

Die FIG 1 zeigt eine Rotorlagereinheit 1. Die Rotorlagereinheit 1 steht auf einem Fundament 5 und weist einen Wellenteil 11, einen Führungskasten 12 und ein Gehäuseteil 13 auf. Der Wellenteil 11 ist gegenüber dem Gehäuseteil 13 drehbar angeordnet, insbesondere drehbar gelagert. Das Gehäuseteil 13 ist mit dem Führungskasten 12 reibschlüssig verbunden, so dass an der Grenze zwischen Gehäuseteil 13 und Führungskasten 12 eine reibschlüssige Verbindung 30 vorhanden ist. Die FIG 2 zeigt eine weitere Sicht auf die Rotorlagereinheit 1. Zur Vermeidung von Wiederholungen wird auf die Beschreibung zur FIG 1 sowie auf die dort eingeführten Bezugszeichen verwiesen. Der Führungskasten 12 kann sich dabei in einen ersten Teil 121 des Führungskastens 12 und in einen zweiten Teil 122 des Führungskastens 12 aufteilen. Durch einen einstellbaren und vorgebbaren Abstand d zwischen dem ersten Teil 121 und dem zweiten Teil 122 kann die Höhe des Reibschlusses der reibschlüssigen Verbindung 30 zwischen dem Gehäuseteil 13 und dem Führungskasten 12, der durch den ersten Teil 121 und zweiten Teil 122 gebildet wird, eingestellt werden. Eine weitere Möglichkeit, die Höhe des Reibschlusses der reibschlüssigen Verbindung 30 zu verändern, besteht in der tribologischen Ausgestaltung der reibschlüssigen Verbindung 30 zwischen dem Führungskasten 12 und dem Gehäuseteil 13.

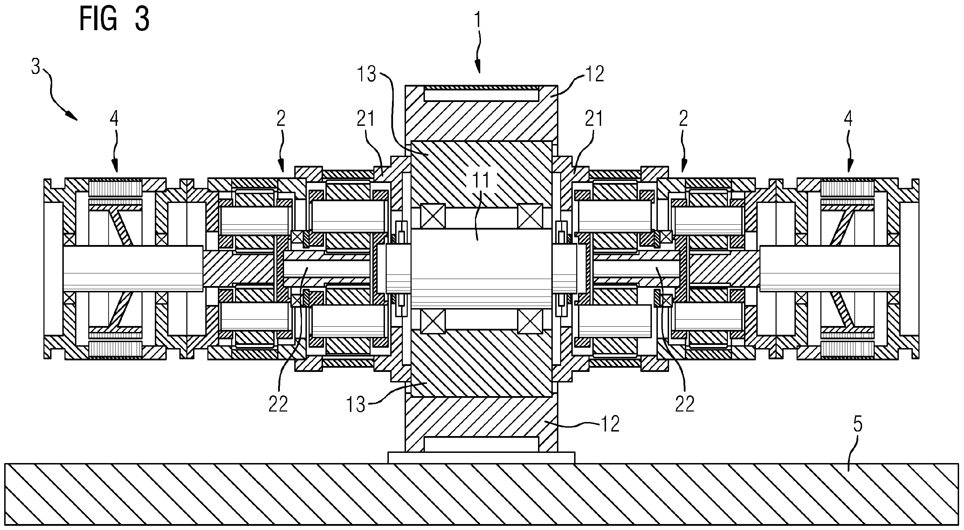

Die FIG 3 zeigt einen Prüfaufbau 3 mit einer Rotorlagereinheit 1. Zur Vermeidung von Wiederholungen wird auf die Beschreibung zu den Figuren 1 und 2 sowie auf die dort eingeführten Bezugszeichen verwiesen. Die zu prüfende Antriebskomponente 2 ist in diesem Ausführungsbeispiel ein Getriebe, hier als Planetengetriebe ausgebildet. Die zu prüfende Antriebskomponente 2 ist mit einer elektrischen Maschine 4 verbunden, mit der die Test- oder Prüfbedingungen in Form von Drehmoment und Drehzahl auf zu prüfende Antriebskomponente 2 gegeben werden können. Die andere Seite des Planetengetriebes, also der zu prüfenden Antriebskomponente 2, ist mit der Rotorlagereinheit 1 verbunden, so dass die Welle 22 des Getriebes 2 beispielsweise durch die Rotorlagereinheit 1 oder durch eine Lagerung im Getriebe drehbar gelagert wird. Das Gehäuse 21 der zu prüfenden Antriebskomponente 2 wird beispielsweise mittels eines Flansches mit der Rotorlagereinheit 1 verbunden und kann darüber im dynamischen Betrieb auch die Drehmomentrückführung bis in das Fundament 5 sicherstellen.

Erst im Störfall, wenn beispielsweise die Welle 22 sich im Getriebe verkeilt, entsteht eine Kraft zwischen der Welle 22 und dem Gehäuse 21 des Getriebes. Diese Kraft liegt aufgrund der kraftschlüssigen und/oder formschlüssigen Verbindungen zwischen dem Wellenteil 11 der Rotorlagereinheit 1 und der Welle 22 der zu prüfenden Antriebskomponente 2 sowie zwischen dem Gehäuseteil 13 der Rotorlagereinheit 1 und dem Gehäuse 21 der zu prüfenden Antriebskomponente 2 auch an der reibschlüssigen Verbindung 30, d.h. zwischen dem Gehäuseteil 13 und dem Führungskasten 12, an. Übersteigt diese Kraft den Wert, den die reibschlüssige Verbindung 30 aufnehmen kann, dann kann sich das Gehäuseteil 13 gegenüber dem Führungskasten 12 bewegen, also mit dem Wellenteil 11 rotieren. Damit wird die Kraft, die über die Trag- bzw. Stützstruktur auf das Fundament 5 übertragen wird, limitiert. Der Vorteil der Rotation des Gehäuseteils 13 besteht dann darin, dass die aufgrund des Störfalls wirkende Kraft zwischen Welle 22 und Gehäuse 21 nicht mehr, zumindest nicht mehr vollständig, über die Rotorlagereinheit 1 in das Fundament 5 eingeleitet werden muss. Das senkt sowohl die Anforderungen an die Festigkeit der Rotorlagereinheit 1 als auch an die Auslegung des Fundaments 5.

Der dargestellte Aufbau entspricht einer back-to-back Anordnung, bei der zwei zu prüfende Antriebskomponenten 2, in diesem Ausführungsbeispiel zwei Planetengetriebe, geprüft werden können. Der Prüfaufbau 3 ist dabei symmetrisch aufgebaut, so dass auch eine zweite elektrische Maschine 4 vorhanden ist. In der Mitte befindet sich die Rotorlagereinheit 1, die mit den Getrieben 2 verbunden ist und beispielsweise die Planetenträger der beiden Planetengetriebe 2 lagert. Somit sind beide Planetengetriebe 2 über die Rotorlagereinheit 1 miteinander verbunden. Ein derartiger Aufbau eignet sich aufgrund seiner Leistungsfähigkeit insbesondere für das Testen und Prüfen eines Windgetriebes, also eines Getriebes für die Anwendung in einer Windkraftanlage, sowie auch für Generatoren von Windkraftanlagen und entsprechenden Getriebe-Generator Kombinationen, da diese oftmals eine Nennleistung von mehr als 3 MW aufweisen. Durch die zwei elektrischen Maschinen 4 ist es möglich, Drehmoment und Drehzahl unabhängig vorzugeben, mit denen die zu prüfenden Antriebskomponenten 2 belastet oder getestet werden.

Zusammenfassend betrifft die Erfindung eine Rotorlagereinheit für die Prüfung einer Antriebskomponente. Zur Verbesserung der Anordnung für die Prüfung der Antriebskomponente wird vorgeschlagen, dass die Rotorlagereinheit einen Wellenteil, einen Führungskasten und ein Gehäuseteil aufweist, wobei der Wellenteil gegenüber dem Gehäuseteil drehbar gelagert ist, wobei das Gehäuseteil reibschlüssig mit dem Führungskasten verbunden ist, wobei das Gehäuseteil der Rotorlagereinheit zur kraftschlüssigen und/oder formschlüssigen Verbindung mit einem Gehäuse der zu prüfenden Antriebskomponente eingerichtet ist, wobei der Wellenteil der Rotorlagereinheit zur kraftschlüssigen und/oder formschlüssigen Verbindung mit einer Welle der zu prüfenden Antriebskomponente eingerichtet ist. Ferner betrifft die Erfindung einen Prüfaufbau mit einer derartigen Rotorlagereinheit, wobei der Prüfaufbau ferner die zu prüfende Antriebskomponente, insbesondere das Getriebe oder das Planetengetriebe, aufweist, wobei das Gehäuseteil der Rotorlagereinheit kraftschlüssig und/oder formschlüssig mit dem Gehäuse der zu prüfenden Antriebskomponente verbunden ist, wobei der Wellenteil der Rotorlagereinheit kraftschlüssig und/oder formschlüssig mit der Welle der zu prüfenden Antriebskomponente verbunden ist.

## Patentansprüche

1. Rotorlagereinheit (1) für die Prüfung einer Antriebskomponente (2), wobei die Rotorlagereinheit (1) einen Wellenteil (11), einen Führungskasten (12) und ein Gehäuseteil (13) aufweist, wobei der Wellenteil (11) gegenüber dem Gehäuseteil (13) drehbar angeordnet ist, wobei das Gehäuseteil (13) mit dem Führungskasten (12) verbunden ist, wobei der Wellenteil (11) der Rotorlagereinheit (1) zur kraftschlüssigen und/oder formschlüssigen Verbindung mit einer Welle (22) der zu prüfenden Antriebskomponente (2) eingerichtet ist, **dadurch gekennzeichnet, dass** das Gehäuseteil (13) reibschlüssig mit dem Führungskasten (12) verbunden ist, und dass das Gehäuseteil (13) der Rotorlagereinheit (1) zur kraftschlüssigen und/oder formschlüssigen Verbindung mit einem Gehäuse (21) der zu prüfenden Antriebskomponente (2) eingerichtet ist.

2. Rotorlagereinheit (1) nach Anspruch 1, wobei die zu prüfende Antriebskomponente (2) ein Getriebe, insbesondere ein Planetengetriebe, ist.

3. Rotorlagereinheit (1) nach Anspruch 1 oder 2, wobei das Gehäuseteil (13) einen Gehäuseflansch zur drehfesten Befestigung des Gehäuses (21) der zu prüfenden Antriebskomponente (2) mittels axial ausgerichteter Befestigungsmittel aufweist.

4. Rotorlagereinheit (1) nach einem der Ansprüche 1 bis 3, wobei das Gehäuseteil (13) axial ausgerichtete Sacklöcher mit Innengewinde zur Verschraubung mit dem Gehäuse (21) der zu prüfenden Antriebskomponente (2) aufweist.

5. Rotorlagereinheit (1) nach einem der Ansprüche 1 bis 4, wobei das Gehäuseteil (13) im Wesentlichen spiegelbildlich ausgestaltet ist.

6. Rotorlagereinheit (1) nach einem der Ansprüche 1 bis 5, wobei der Führungskasten einen ersten Teil (121) und einen zweiten Teil (122) aufweist, wobei die Höhe eines Reibschlusses der reibschlüssigen Verbindung (30) durch einen vorgebbaren Abstand (d) zwischen dem ersten Teil (121) und dem zweiten Teil (122) des Führungskastens (12) und/oder durch die tribologische Kontaktgestaltung zwischen dem Gehäuseteil (13) und dem Führungskasten (12) einstellbar ist.

7. Rotorlagereinheit (1) nach Anspruch 6, wobei der erste Teil (121) und/oder der zweite Teil (122) eine zum Gehäuse teil (13) weisende abriebfeste Gleitfläche aufweist, wobei die abriebfeste Gleitfläche insbesondere durch eine PVD Hartstoffschicht und/oder eine DLC-Sicht ausgebildet ist.

8. Prüfaufbau (3) mit einer Rotorlagereinheit (1) nach einem der Ansprüche 1 bis 7, wobei der Prüfaufbau (3) ferner die zu prüfende Antriebskomponente (2), insbesondere das Getriebe oder das Planetengetriebe, aufweist, wobei das Gehäuseteil (13) der Rotorlagereinheit (1) kraftschlüssig und/oder formschlüssig mit dem Gehäuse (21) der zu prüfenden Antriebskomponente (2) verbunden ist, wobei der Wellenteil (11) der Rotorlagereinheit (1) kraftschlüssig und/oder formschlüssig mit der Welle (22) der zu prüfenden Antriebskomponente (2) verbunden ist.

9. Prüfaufbau (3) nach Anspruch 8, wobei die zu prüfende Antriebskomponente (2) ein Getriebe, insbesondere ein Planetengetriebe, ist.

10. Prüfaufbau (3) nach einem der Ansprüche 8 oder 9, wobei die zu prüfende Antriebskomponente (2) oder das Getriebe für die Anwendung in einer Windkraftanlage vorgesehen ist.

11. Prüfaufbau (3) nach einem der Ansprüche 8 bis 10, wobei die Nennleistung der zu prüfenden Antriebskomponente (2) größer ist als 3 MW.

12. Prüfaufbau (3) nach einem der Ansprüche 8 bis 11, wobei der Prüfaufbau (3) in einer back-to-back Anordnung angeordnet ist.

13. Prüfaufbau (3) nach einem der Ansprüche 8 bis 12, wobei die zu prüfende Antriebskomponente (2) mit einer elektrischen Maschine (4) gekoppelt ist.

14. Verwendung einer Rotorlagereinheit (1) nach einem der Ansprüche 1 bis 7 und/oder eines Prüfaufbaus (3) nach einem der Ansprüche 8 bis 13 zum Prüfen und/oder Testen eines Planeten getriebes für eine Windkraftanlage.

15. Verwendung nach Anspruch 14, wobei ein Hohlrad des Planetengetriebes als Gehäuse (21) und eine Sonnenwelle und/oder eine Planetenträgerwelle des Planetengetriebes als Welle (22) verwendet wird.

## Claims

1. Rotor bearing unit (1) for testing a drive component (2), wherein the rotor bearing unit (1) has a shaft part (11), a guide box (12), and a housing part (13), wherein the shaft part (11) is arranged rotatably in relation to the housing part (13), wherein the housing part (13) is connected to the guide box (12), wherein the shaft part (11) of the rotor bearing unit (1) is designed for force-fitting and/or form-fitting connection to a shaft (22) of the drive component (2) to be tested, **characterized in that** the housing part (13) is connected in a frictionally locking manner to the guide box (12), and **in that** the housing part (13) of the rotor bearing unit (1) is designed for force-fitting and/or form-fitting connection to a housing (21) of the drive component (2) to be tested.

2. Rotor bearing unit (1) according to Claim 1, wherein the drive component (2) to be tested is a transmission, in particular a planetary transmission.

3. Rotor bearing unit (1) according to Claim 1 or 2, wherein the housing part (13) has a housing flange for fastening the housing (21) of the drive component (2) to be tested thereto for conjoint rotation by means of axially oriented fastening means.

4. Rotor bearing unit (1) according to one of Claims 1 to 3, wherein the housing part (13) has axially oriented blind holes having internal threads for screwing to the housing (21) of the drive component (2) to be tested.

5. Rotor bearing unit (1) according to one of Claims 1 to 4, wherein the housing part (13) is configured to be substantially mirror-inverted.

6. Rotor bearing unit (1) according to one of Claims 1 to 5, wherein the guide box has a first part (121) and a second part (122), wherein the level of frictional locking of the frictionally locking connection (30) can be set by a predeterminable distance (d) between the first part (121) and the second part (122) of the guide box (12) and/or by the tribological contact configuration between the housing part (13) and the guide box (12).

7. Rotor bearing unit (1) according to Claim 6, wherein the first part (121) and/or the second part (122) have/has an abrasion-resistant sliding surface facing the housing part (13), wherein the abrasion-resistant sliding surface is formed in particular by a PVD hard material layer and/or by a DLC layer.

8. Test setup (3) having a rotor bearing unit (1) according to one of Claims 1 to 7, wherein the test setup (3) furthermore has the drive component (2) to be tested, in particular the transmission or the planetary transmission, wherein the housing part (13) of the rotor bearing unit (1) is connected in a force-fitting and/or form-fitting manner to the housing (21) of the drive component (2) to be tested, wherein the shaft part (11) of the rotor bearing unit (1) is connected in a force-fitting and/or form-fitting manner to the shaft (22) of the drive component (2) to be tested.

9. Test setup (3) according to Claim 8, wherein the drive component (2) to be tested is a transmission, in particular a planetary transmission.

10. Test setup (3) according to either of Claims 8 and 9, wherein the drive component (2) to be tested or the transmission is provided for use in a wind turbine.

11. Test setup (3) according to one of Claims 8 to 10, wherein the nominal power of the drive component (2) to be tested is greater than 3 MW.

12. Test setup (3) according to one of Claims 8 to 11, wherein the test setup (3) is arranged in a back-to-back arrangement.

13. Test setup (3) according to one of Claims 8 to 12, wherein the drive component (2) to be tested is coupled to an electric machine (4).

14. Use of a rotor bearing unit (1) according to one of Claims 1 to 7 and/or of a test setup (3) according to one of Claims 8 to 13 for testing a planetary transmission for a wind turbine.

15. Use according to Claim 14, wherein a ring gear of the planetary transmission is used as the housing (21) and a sun shaft and/or a planet carrier shaft of the planetary transmission is used as the shaft (22).

## Revendications

1. Unité formant palier de rotor (1) destinée à tester un composant d'entraînement (2), l'unité formant palier de rotor (1) comportant une partie arbre (11), un caisson de guidage (12) et une partie boîtier (13), la partie arbre (11) étant disposée de manière rotative par rapport à la partie boîtier (13), la partie boîtier (13) étant reliée au caisson de guidage (12), la partie arbre (11) de l'unité formant palier de rotor (1) étant conçue pour établir une liaison en force et/ou par complémentarité de formes avec un arbre (22) du composant d'entraînement (2) à tester, **caractérisée en ce que** la partie boîtier (13) est reliée par friction au caisson de guidage (12) et la partie boîtier (13) de l'unité formant palier de rotor (1) est conçue pour établir une liaison en force et/ou par complémentarité de formes avec un boîtier (21) du composant d'entraînement (2) à tester.

2. Unité formant palier de rotor (1) selon la revendication 1, le composant d'entraînement (2) à tester étant une transmission, en particulier une transmission à engrenages planétaires.

3. Unité formant palier de rotor (1) selon la revendication 1 ou 2, la partie boîtier (13) comportant une bride de boîtier destinée à fixer solidairement en rotation le boîtier (21) du composant d'entraînement (2) à tester à l'aide de moyens de fixation orientés axialement.

4. Unité formant palier de rotor (1) selon l'une des revendications 1 à 3, la partie boîtier (13) comportant des trous borgnes orientés axialement et pourvus de filetages intérieurs destinés à la visser au boîtier (21) du composant d'entraînement (2) à tester.

5. Unité formant palier de rotor (1) selon l'une des revendications 1 à 4, l'unité formant partie de boîtier (13) étant conçue sensiblement à symétrie de miroir.

6. Unité formant palier de rotor (1) selon l'une des revendications 1 à 5, le caisson de guidage comportant une première partie (121) et une deuxième partie (122), la hauteur de la liaison par friction (30) étant réglable par une distance spécifiée (d) entre la première partie (121) et la deuxième partie (122) du caisson de guidage (12) et/ou par la conception de contact tribologique entre la partie boîtier (13) et le caisson de guidage (12).

7. Unité formant palier de rotor (1) selon la revendication 6, la première partie (121) et/ou la deuxième partie (122) comportant une surface de glissement résistante à l'abrasion dirigée vers la partie boîtier (13), la surface de glissement résistante à l'abrasion étant formée notamment par une couche de matière dure PVD et/ou une couche DLC.

8. Structure de test (3) comprenant une unité formant palier de rotor (1) selon l'une des revendications 1 à 7, la structure de test (3) comportant en outre le composant d'entraînement (2) à tester, en particulier la transmission ou la transmission à engrenages planétaires, la partie boîtier (13) de l'unité formant palier de rotor (1) étant reliée en force et/ou par complémentarité de formes au boîtier (21) du composant d'entraînement (2) à tester, la partie arbre (11) de l'unité formant palier de rotor (1) étant reliée en force et/ou par complémentarité de formes à l'arbre (22) du composant d'entraînement (2) à tester.

9. Structure de test (3) selon la revendication 8, le composant d'entraînement (2) à tester étant une transmission, en particulier une transmission à engrenages planétaires.

10. Structure de test (3) selon l'une des revendications 8 ou 9, le composant d'entraînement (2) à tester ou la transmission étant destinés à être utilisés dans une éolienne.

11. Structure de test (3) selon l'une des revendications 8 à 10, la puissance nominale du composant d'entraînement (2) à tester étant supérieure à 3 MW.

12. Structure de test (3) selon l'une des revendications 8 à 11, la structure de test (3) étant disposée selon un agencement dos à dos.

13. Structure de test (3) selon l'une des revendications 8 à 12, le composant d'entraînement (2) à tester étant accouplé à une machine électrique (4).

14. Utilisation d'une unité formant palier de rotor (1) selon l'une des revendications 1 à 7 et/ou d'une structure de test (3) selon l'une des revendications 8 à 13 pour vérifier et/ou tester une transmission à engrenages planétaires destinée à une éolienne.

15. Utilisation selon la revendication 14, une couronne de la transmission à engrenages planétaires étant utilisée comme boîtier (21) et un arbre solaire et/ou un arbre porte-satellites de la transmission à engrenages planétaires étant utilisé comme arbre (22).
